# EUROPEAN PATENT APPLICATION

(11) **EP 1 187 492 A1**
(43) Date of publication of application: **13.03.2002**
(21) Application number: 00402486.5
(22) Date of filing: 08.09.2000
(51) Int. Cl.: H04N 9/64

(54) **Video apparatus having a scart connector and process for controlling such a video apparatus**

(71) Applicant: Thomson Licensing S.A., 92100 Boulogne-Billancourt (FR)
(72) Inventor: Dumont, Frank, 92648 Boulogne Cedex (FR); Tan, Chee Lam, 92648 Boulogne Cedex (FR); Zhou, Qing Jin, 92648 Boulogne Cedex (FR)
(74) Representative: Bonnans, Arnaud

(57) **Abstract**

A video apparatus which is able to generate RGB video signals, notably a monochrome signal on a monochrome pin (R), and S-Video signals, notably a chrominance signal on a chrominance pin (C), has a Scart connector (28).

A micro-processor (30) generates a control signal M directed to a chrominance switch (36) for selectively connecting a pin (15) of the Scart connector (28) to the monochrome pin (R) or to the chrominance pin (C).

A process for controlling the video apparatus is also proposed.

## Description

The invention relates to a video apparatus having a Scart connector and to a process for controlling such a video apparatus.

It is well-known to provide a video apparatus with a Scart connector through which audio and video signals can be transmitted to another video apparatus.

The normalised Scart connector can carry the video signals representing images according to two distinct formats:
- a CVBS signal containing information about luminance, chrominance and synchronisation, which is output on pin 19 or input on pin 20 ;
- a RGB signal composed of three monochrome signals respectively a red component on pin 15 (ground corresponding pin 13), a green component on pin 11 (ground corresponding pin 9) and a blue component on pin 7 (ground corresponding pin 5).

It has also been proposed to represent images according to a so-called S-Video format composed of a luminance signal Y and of a separate chrominance signal C.

In order to allow S-Video signals to be carried by the normalised Scart connector without modification, it has been proposed to use existing pins for the luminance signal and for the chrominance signal. Specifically, pins 19 and 20 (normally dedicated to CVBS) are used to carry the luminance signal Y and pin 15 (normally dedicated to the red signal of the RGB mode) to carry the chrominance signal C.

The European patent application published under No. 0 309 891 describes a TV receiver which can cope with such a solution. In this TV receiver, a circuit is provided for detecting a burst signal in the incoming video signal ; a switch then accordingly connects the relevant circuits into a configuration for receiving CVBS signals or a configuration for receiving S-Video signals.

It is also proposed to choose between these two possible configurations for signals which are output from this video apparatus. According to known solutions, the choice is made by the user by acting on a manual switch which is situated near the Scart connector, as in the S-VHS video cassette recorder referenced HR - S9500E/EH from JVC.

In order to simplify the choice of the user and to give rise to further possibilities, the invention proposes a video apparatus comprising a RGB generator outputting notably a monochrome signal on a monochrome pin, a S-Video generator outputting notably a chrominance signal on a chrominance pin, a Scart connector with a first pin, a chrominance switch for selectively connecting the first pin to the monochrome pin or to the chrominance pin and a micro-processor generating a control signal directed to the chrominance switch.

Some of the preferred features are the following :
- a CVBS generator outputs a composite signal on a composite signal pin, the S-Video generator outputs a luminance signal on a luminance pin, the Scart connector comprises a second pin and a luminance switch controlled by said control signal selectively connects the second pin to the composite signal pin or to the luminance pin ;
- the chrominance switch is controlled depending on said control signal and on a fast-blanking signal for synchronisation of the monochrome signal;
- the Scart connector comprises a third pin carrying said fast-blanking signal;
- the chrominance switch is controlled by the output of an AND-gate receiving said control signal on a first input and on a second input said fast-blanking signal inverted by an inverter;
- the chrominance switch is controlled by said control signal;
- the S-Video generator outputs a luminance signal on a luminance pin, a video generator comprising the S-Video generator outputs a composite signal on a composite signal pin, the Scart connector comprises a second pin and a luminance switch controlled by said control signal selectively connects the second pin to the composite signal pin or to the luminance pin ;
- a video generator comprising the S-Video generator outputs first RGB signals to a RGB switch and the RGB switch outputs second RGB signals including said monochrome signal;
- said RGB generator outputs at least a further monochrome signal on a further monochrome pin and at least a ground switch selectively connects a further pin of the Scart connector to said further monochrome pin or to ground.

The invention also proposes a process for controlling such a video apparatus, comprising the step of:
- allowing the user to select a preferred mode ;
- recording the preferred mode in a memory accessible to the micro-processor ;
- generating said control signal depending notably on said recorded preferred mode.

The invention and other features thereof will now be understood in light of the following description made with reference to the attached drawings where:
- figure 1 represents a first embodiment of a video apparatus according to the invention ;
- figure 2 represents a second embodiment of a video apparatus according to the invention ;
- figure 3 represents a third embodiment of a video apparatus according to the invention.

In the following description, reference numbers 1 to 20 are dedicated to the corresponding pins of the Scart connector according to the norm. It should also be noted that the ground wires are not represented for better clarity of the drawings.

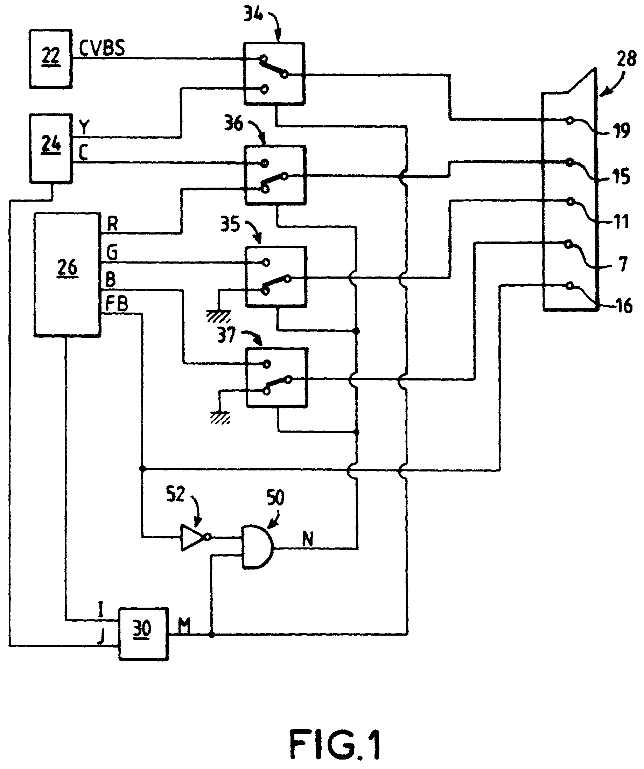

The main elements of the video processing circuits of a video recorder are represented on figure 1. The video recorder is a S-VHS video cassette recorder (VCR) with a CVBS generator 22 and a S-Video generator 24.

Such a VCR can read video tapes recorded according to the VHS standard and thus generate a CVBS signal on the output of the CVBS generator 22 in a conventional way. The CVBS generator 22 represents the set of parts which are used to generate the CVBS signal from the signal recorded on the tape.

In a similar way, the VCR can read video tapes recorded according to the S-VHS standard thanks to the S-Video generator 24 which outputs separate luminance Y and chrominance C signals.

The VCR also includes an On-Screen Display (OSD) circuit 26 for the purpose of displaying menus on a display (for instance a TV set) to which the VCR can be linked via a Scart connector 28.

The OSD circuit 26 generates three separate monochrome signals (respectively red signal R, green signal G and blue signal B) according to the RGB format and a fast blanking signal FB indicating to the display when the RGB signals should be taken into account (high level of FB displaying part of image represented through RGB ; low level of FB displaying part of image representing through CVBS or S-Video). The fast blanking signal FB is transmitted on pin 16 of the Scart connector 28.

The OSD circuit 26 receives instructions from a micro-processor 30 via a data bus I represented as a single wire on figure 1 for simplification.

The VCR comprises four switches, namely two ground switches 35, 37, a chrominance switch 36 and a luminance switch 34. The luminance switch 34 receives on a first input the CVBS signal generated by the CVBS generator 22 and on a second input the luminance signal Y generated by the S-Video generator 24. The luminance switch 34 is controlled by the micro-processor 30 (control signal M) in order to output to pin 19 of the Scart connector 28 one of the input signals, i.e. the CVBS signal or the luminance signal Y.

The chrominance switch 36 receives on a first input the red monochrome signal R from the OSD circuit 26 and on a second input the chrominance signal C from the S-Video generator 24. Depending a command N from the micro-processor 30 generated as explained below, the chrominance switch 36 connects pin 15 of the Scart connector 28 to one of the two inputs R and C.

The first ground switch 35 receives on a first input the green monochrome signal G from the OSD circuit 26 whereas its second input is grounded. Depending on the command N, the first ground switch 35 connects pin 11 of the Scart connector 28 to the input carrying the green signal G or to ground.

The second ground switch 37 receives on a first input the blue monochrome signal B from the OSD circuit 26 whereas its second input is grounded. Depending on the command N, the second ground switch 37 connects pin 7 of the Scart connector 28 to the input carrying the blue signal B or to ground.

Command N is generated at the output of a AND-gate 50 which first input receives the control signal M and which second input receives the inverted fast-blanking signal (*i.e.* the fast-blanking signal FB passed through an inverter 52).

The VCR can work according to two possible modes, namely a first mode where the Scart connector 28 carries a CVBS signal and a second mode where the Scart connector 28 is allowed to carry a S-Video signal ("S-Video via Scart mode"). The working mode can be selected through menus generated by the micro-processor 30 and the OSD circuit 26 and stored in a memory accessible to the micro-processor 30. The two working modes will be described now with further details.

In the first mode, the micro-processor 30 sets the control signal M to low level (0) whereby the luminance switch 34 connects the output of the CVBS generator 22 to pin 19 of the Scart connector 28.

As the control signal M is low, the output (signal N) of the AND-gate 50 is also low, whereby the chrominance switch 36 connects the red signal output R of the OSD circuit 26 with pin 15 of the Scart connector 28 and whereby the ground switches 35, 37 connect respectively the green signal output G and the blue signal output B of the OSD circuit 26 with pins 11 and 7 of the Scart connector 28.

In this mode, the VCR outputs signals on the Scart connector 28 as a conventional VHS machine. Pin 19 is dedicated to CVBS and pins 7, 11 and 15 are fully dedicated to RGB signals incoming for OSD.

It can be noted that, while using this mode, the display apparatus (for instance television set) which is connected to the VCR via Scart connector 28 does not need to be able to receive S-Video signal via its Scart connector.

Additional connectors (not shown) are generally provided to output specifically S-Video signals. Of course, working in the first mode does not impede to output possible S-Video signals on such additional connectors.

In the second mode, that is when the user allows through OSD menus to use the Scart connector 28 for S-Video signals ("S-Video via Scart" mode), the micro-processor 30 will automatically generate the control signal M depending on conditions as explained below :
- when the tape which is played back is recorded according to the VHS standard (this information is given to the micro-processor 30 via connection J), the control signal M is set to 0 (low level): the luminance switch 34 accordingly connects CVBS generator 22 to pin 19 and, as signal N is also low, the chrominance switch 36, the first ground switch 35 and the second ground switch 37 respectively connect red output R, green output G and blue output B of OSD circuit 26 to pins 15, 11 and 7 (as in a conventional VHS VCR, as in the first mode);
- when the tape which is read is detected as recorded according to the S-VHS standard (as previously mentioned, the information is given to the micro-processor 30 via connection J), the control signal M is set to 1 (high level); accordingly, luminance switch 34 connects the Y output of the S-Video generator 24 to pin 19 ; signal N output from the AND-gate 50 will then follow the inverted fast-blanking signal: chrominance switch 36 connects pin 15 to the C output of the S-Video generator 24 when the FB voltage is low and to the red signal output R of the OSD circuit 26 when the FB voltage is high ; similarly, ground switches 35, 37 connect pin 11 and 7 to ground when the FB voltage is low and to the green signal output G and blue signal output B when the FB voltage is high.

The various possibilities of connection are summed up in the table below.

| User Selection | First mode | Second mode | Second mode |
|---|---|---|---|
| Detected format | any | VHS | S-VHS |
| Control signal M | 0 | 0 | 1 |
| Input selected on luminance switch | CVBS | CVBS | Y |
| AND-gate output N | 0 | 0 | 1 when FB low 0 when FB high |
| Input selected on chrominance switch | R | R | C when FB low R when FB high |
| Input selected on first ground switch | G | G | ground when FB low G when FB high |
| Input selected on second ground switch | B | B | ground when FB low B when FB high |

The control of switches, notably the chrominance switch, by the micro-processor 30 allows easy selection (for instance through menus) of the mode by the user.

Moreover, the automatic selection of the connections by the micro-processor 30 associated with the fast-blanking signal FB allows to use correctly the Scart connector 28 for CVBS signal output or for RGB signal output (and thus for OSD), even when the Scart connector 28 is used to carry S-Video signals ("S-Video via Scart").

For instance, if this automatic selection were not provided, it would not be possible to display red OSD when the "S-Video via Scart" is selected by the user.

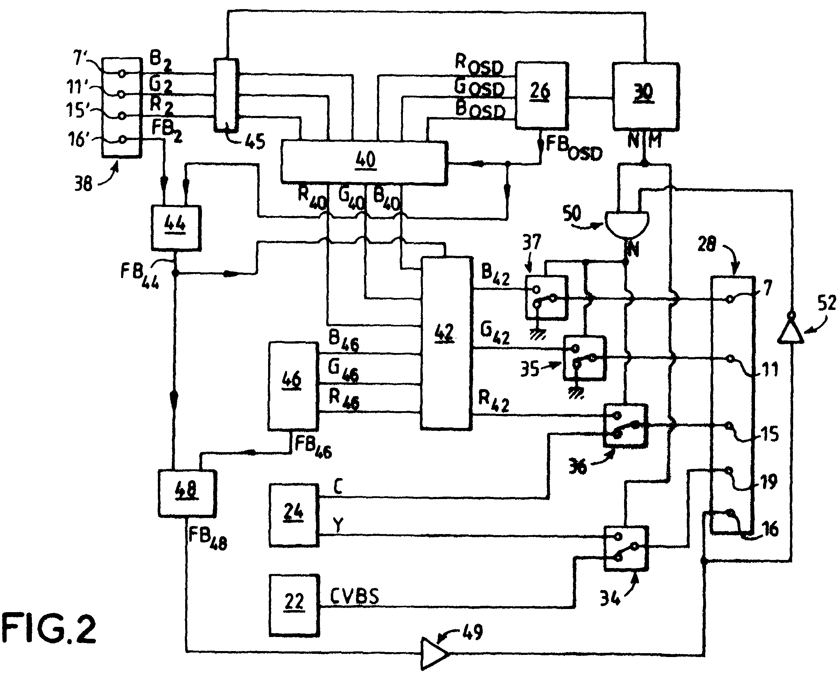

Figure 2 represents a second embodiment of the invention. The parts which are common with the first embodiment (figure 1) use the same reference number and will not be described once again.

The second embodiment is a VCR which includes a further Scart connector 38, generally called Scart2, which pins will be referenced as 1' to 20'. This Scart2 connector 38 allows to connect an external video device to the VCR, for instance a digital set-top box which is able to receive video information from satellites or a cable link. Video sequences are allowed to enter the VCR on pins 7', 11' and 15' of Scart2 connector 38 in a RGB format as a picture to be superimposed on the sequences carried on composite signal pin 19' or generated by the VCR, according to an OSD technique.

The RGB signal received on the pins of the Scart2 connector 38 (composed as usual of three separate monochrome signals R₂, G₂ and B₂) is forwarded to a first RGB switch 40 on three respective inputs. Three other inputs of the first RGB switch 40 receive respectively the three monochrome signals R_{OSD}, G_{OSD} and B_{OSD} from the OSD circuit 26.

The Scart2 connector 38 also outputs a fast blanking signal FB₂ on its pin 16' in accordance with the RGB signal from pins 7', 11' and 15'.

The first RGB switch 40 also receives the fast blanking signal FB_{OSD} from the OSD circuit 26. When FB_{OSD} is high, the first RGB switch 40 transmits on its three RGB outputs R₄₀, G₄₀, B₄₀ respectively the R_{OSD}, G_{OSD} and B_{OSD} signals ; at the opposite, when FB_{OSD} is low, the first RGB switch 40 transmits on its three RGB outputs R₄₀, G₄₀, B₄₀ respectively the R₂, G₂ and B₂ signals. The RGB signal output from the first RGB switch 40 is thus the image from Scart2 connector 38 with superimposed parts of image generated by the OSD circuit 26.

It can be noted that a muting circuit 45 is interposed between the Scart2 connector 38 and the first RGB switch 40. The muting circuit 45 is controlled by the mirco-processor 30 in order to mute the RGB signals from the Scart2 connector 38 when they are not synchronised with the signal output on pin 19 of the Scart connector 28.

A first OR-gate 44 combines the fast blanking signal FB₂ from the Scart2 connector 38 and the fast blanking signal FB_{OSD} from the OSD circuit 26. The output FB₄₄ of the OR-gate 44 is thus at a high level when either the fast blanking signal FB₂ from the Scart2 connector 38 is or the fast blanking signal FB_{OSD} from the OSD circuit 26 is at a high level. At the opposite, when both FB₂ and FB_{OSD} are at a low level, FB₄₄ is at a low level. Said differently, FB₄₄ represents the fast blanking signal for the image from the Scart2 connector 38 (represented by R₂, G₂ and B₂) with superimposed image from the OSD circuit 26 (represented by R_{OSD}, G_{OSD} and B_{OSD}).

The video apparatus also comprises a RGB generator 46 which outputs a RGB video signal on outputs R₄₆, G₄₆, B₄₆ in accordance with a fast blanking signal FB₄₆. In the described embodiment, the RGB generator 46 is a MPEG decoder STI5500 from ST fed by a bit-stream processor SAA6700H from Philips according to data read on a tape in a digital format. Of course, another medium could be used : for instance, the video signal represented by R₄₆, G₄₆, B₄₆ could be taken from a video disc.

A second RGB switch 42 receives on the one hand the signals R₄₀, G₄₀, B₄₀ from the first RGB switch 40 and on the other hand the signals R₄₆, G₄₆, B₄₆ from the RGB generator 46. The second RGB switch 42 is controlled by the output of the first OR-gate, *i.e.* the fast blanking signal FB₄₄. The second RGB switch 42 outputs a RGB signal on pins R₄₂, G₄₂ and B₄₂ which is selectively the signal from the first RGB switch 40 or the signal from the RGB generator 46 depending on the fast blanking signal FB₄₄.

More precisely, the second RGB switch 42 outputs the RGB signal received from the first RGB switch 40 when the fast blanking signal FB₄₄ is at a high level and the RGB signal received from the RGB generator 46 when the fast blanking signal FB₄₄ is at a low level. The video signal represented by R₄₂, G₄₂ and B₄₂ at the output of the second RGB switch 42 is thus the image from the RGB generator 46 on which is superimposed the image for the first RGB switch 40, *i.e.* the image from the Scart2 connector 38 with superimposed OSD (from OSD circuit 26).

A second OR gate 48 receives the fast blanking signal FB₄₄ from the first OR gate 44 and the fast blanking signal FB₄₆ from the RGB generator 46. In a way similar to the first OR gate 44, the second OR gate 48 realises a logical OR operation between these two signals and generates on its output FB₄₈ a fast blanking signal corresponding to the video signal generated on the output of the second RGB switch 42. This fast blanking signal FB₄₈ is then passed via a 10 dB amplifier 49 to pin 16 of the Scart connector 28.

The amplifier 49 allows to output on pin 16 a sufficient voltage to be used by the apparatus connected to the Scart connector 28 (*e.g.* display) in spite of the possible voltage reductions in OR-gates 44 and 48 and of possible uneveness between the various initial blanking signals FB₂, FB_{OSD} and FB₄₆.

A luminance switch 34 receives a composite video signal CVBS from a CVBS generator 22 and a luminance signal Y from a S-Video generator 24. The luminance switch 34 is controlled by a control signal M from the micro-processor 30 to selectively output to pin 19 of the Scart connector 28 the composite video signal CVBS or the luminance signal Y.

A chrominance switch 36 receives a chrominance signal C from the S-Video generator 24 and the red signal R₄₂ from the second RGB switch 42. The chrominance switch 36 is controlled as explained below to selectively output to pin 15 of the Scart connector 28 the red signal R₄₂ or the chrominance signal C.

A first ground switch 35 allows to selectively connect pin 11 of the Scart connector 28 to the green signal G₄₂ from the second RGB switch 42 or to ground. Similarly, a second ground switch 37 allows to selectively connect pin 7 of the Scart connector 28 to the blue signal B₄₂ from the second RGB switch 42 or to ground. In the present embodiment, both the first ground switch 35 and the second ground switch 37 are controlled by the signal N controlling the chrominance switch 36 as will now be explained.

The micro-processor 30 generates the control signal M to control the luminance switch 34 depending on the mode selected by the user and on the presence of signal output from the S-Video generator 24, as explained in relation with the first embodiment. The control signal M is also passed to a first input of AND-gate 50. The second input of the AND-gate 50 receives the fast blanking signal FB₄₈ (from second OR-gate 48) inverted by an inverter 52. The output of the AND-gate 50 controls the chrominance switch 36 and the two ground switches 35, 37.

When the user has selected the "S-Video via Scart" mode and when the S-Video generator 24 is active, the micro-processor 30 sets the control signal M to 1 (high level).

Under these conditions, if nothing from the second RGB switch 42 is to be superimposed on the S-Video signal, the fast blanking signal FB₄₈ from the second OR-gate is low ; the signal from inverter 52 will then be high and hence the output of the AND-gate 50 will also be high : accordingly, the chrominance switch 36 will connect pin 15 to the chrominance output C of the S-Video generator and the ground switches 35, 37 will connect pins 7 and 11 to ground (in order to avoid cross-talk). Of course, as the control signal M is high, the luminance switch 34 connects pin 19 to the luminance output Y of the S-Video generator 24.

Still under the same conditions (high control signal), the second RGB switch 42 can output a RGB signal to be superimposed (or inserted) on the video signal from the S-Video generator 24. During the insertion, the fast blanking signal FB₄₈ is high ; the output of the inverter 52 is consequently low which sets the output of the AND-gate 50 to low level : the chrominance switch 36 and the ground switches 35, 37 then connect the R,G,B outputs respectively to pins 15, 11 and 7. It is to be noted that, in the present embodiment, the control of the luminance switch 34 remains unchanged during insertion, so that pin 19 of the Scart connector 28 remains connected to the luminance output Y of the S-Video generator 24.

According to a possible variation, the chrominance switch 36 is controlled by control signal M : only the connections in the ground switches 35, 37 are changed when the fast-blanking signal FB is high during the "S-Video via Scart" mode, the chrominance switch 34 maintaining the connection between the chrominance output C and pin 15.

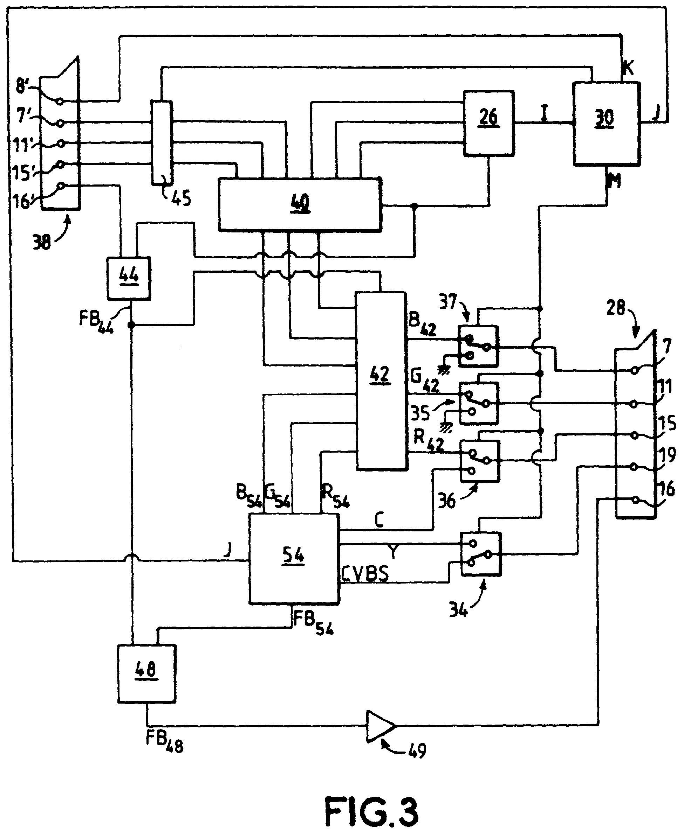

A third embodiment of the invention is illustrated on figure 3. The parts which are similar to the second embodiment will not be described once again.

The luminance switch 34, the chrominance switch 36 and the ground switches 35, 37 are controlled by a command M from the micro-processor 30. (Countrarily to figure 2, the fast blanking signal is not used to control any of said switches.)

A video generator 54 comprises a composite output CVBS, S-Video outputs (namely a luminance output Y and a chrominance output C) and RGB outputs (namely a monochrome red output R₅₄, a monochrome green output G₅₄, a monochrome blue output B₅₄ and a fast blanking signal output FB₅₄). The video generator 54 carries on said outputs three representations (composite, S-Video and RGB) of the same video sequence.

In the present example, the video generator 54 comprises a MPEG decoder STI5500 from ST fed by a bit-stream processor SAA6700H from Philips according to data read on a tape in a digital format.

The RGB outputs R₅₄, G₅₄, B₅₄ of the video generator 54 are connected as inputs to the second RGB switch 42. The RGB outputs of the first RGB switch 40 are also input to the second RGB switch, as described in relation with the second embodiment.

The video generator 54 carries on its output FB₅₄ a fast-blanking signal synchronised with the RGB signals R₅₄, G₅₄, B₅₄ and which is input to the second OR-gate 48. The RGB signals can be muted by the video generator 54 ; the fast-blanking signal is then FB₅₄ at low level.

The micro-processor 30 is linked with the OSD circuit 26 by a bus I and to the video generator 54 by a bus J. The micro-processor 30 is also connected to pin 8' of the Scart2 connector 38 via a connection K. Pin 8' is generally called "Slow switch" and carries information whether a video signal is incoming from the Scart2 connector 38 with a time constant largely longer than fast blanking signals.

As previously described, when a S-Video signal is available on outputs Y, C of the video generator 54 and when the "S-Video via Scart" mode is selected by the user, the luminance switch 34 connects output Y to pin 19 of the Scart connector 28, the chrominance switch 36 connects output C to pin 15, the first ground switch 35 connects pin 11 to ground and the second ground switch 37 connects pin 7 to ground. The RGB signals R₅₄, G₅₄, B₅₄ from the video generator 54 are muted.

The video apparatus can then operate according to two alternative processes when OSD insertion is required. The process to be used is selected according to a prior choice made by the user (for instance through "User Prefereces" menus) and recorded in a memory accessible to the microcomputer 30. It should be noted however that one only of the two processes could be implemented in a given video apparatus.

According to a first process, when a RGB video signal from the Scart2 connector 38 is detected by the micro-processor 30 (thanks to connection K as explained above) or when the micro-processor 30 has to send instructions for OSD insertion to the OSD circuit 26 on bus I, the luminance switch 34 connects back the CVBS output of the video generator 54 to pin 19 of the Scart connector 28, the chrominance switch 36 connects back the red output R of the second RGB switch 42 to pin 15, the first ground switch 35 connects back the green ouput G of the second RGB switch 42 to pin 11 and the second ground switch connects back the blue output B of the second RGB switch 42 to pin 7. Of course, the switches are controlled by the micro-processor 30 through control line M. The RGB signals R₅₄, G₅₄, B₅₄ from the video generator 54 remain muted.

According to the first process, the CVBS signal is thus used instead of the S-Video signal during OSD insertion (either from Scart2 or from the OSD circuit) ; this leads to a loss in image quality but to a very secure OSD insertion as the Scart switch is used in a totally conventional manner.

It is important to point out that this process can be used in a video apparatus where the video generator 54 does not generate RGB signals, as for instance in the S-VHS VCR described as a first embodiment.

According to the second process, when a RGB video signal from the Scart2 connector 38 is detected by the micro-processor 30 (thanks to connection K as explained above) or when the micro-processor 30 has to send instructions for OSD insertion to the OSD circuit 26 on bus I, the micro-processor 30 controls through line M the chrominance switch 36, the first ground switch 35 and the second ground switch 37 respectively to connect the red output R, the green ouput G and the blue output B of the second RGB switch 42 back to pins 15, 11 and 7 of the Scart connector 28 ; simultaneously, the micro-processor 30 controls the video generator 54 to unmute the video signal on the RGB outputs, that is to send out signals on outputs R₅₄, G₅₄, B₅₄ and FB₅₄.

The video sequence represented by R₅₄, G₅₄, B₅₄ is then mixed by the second RGB switch with the insertion to be realised (coming from the first RGB switch 40 and comprising the video sequence from Scart2 with superimposed video sequence from the OSD circuit 26). The mixing is realised as described in relation to the RGB generator 46 of the second embodiment. Due to the connection of the switches indicated above, the second RGB switch 42 sends out the desired video sequence (with insertion) to pins 15, 11 and 7 of the Scart connector 28 in synchronism with the fast-blanking signal FB₄₈ output from the second OR-gate 48.

For this second process, the connection realised by the luminance switch 34 has not to be taken into consideration as neither the luminance signal Y nor the composite signal CVBS are used. However, in order to simplify the circuitry, only one control line M is used and the luminance switch 34 will connect the composite signal output CVBS to pin 19 of the Scart connector 28.

To sum up, according to the second process, the video generator 54 is used as third source of RGB signal in addition to the OSD circuit 26 (first source) and the Scart2 connector 38 (second source). The rules for priority of superimposition (first source on top, then second source, lastly third source) are determined by the connection of the first and second RGB switches 40, 42 as explained in the second embodiment.

According to a possible variation, ground switches 35 and 37 can be omitted, the green output G, G₄₂ and blue output B, B₄₂ of the OSD circuit 26 or second RGB switch 42 being directly connected to pins 11 and 7 of the Scart connector 28. This solution could lead to cross-talk problems but it is cheaper.

## Claims

1. Video apparatus comprising :
- a RGB generator (26 ; 42) outputting notably a monochrome signal on a monochrome pin (R ; R₄₂);
- a S-Video generator (24 ; 54) outputting notably a chrominance signal on a chrominance pin (C);
- a Scart connector (28) with a first pin (15);
- a chrominance switch (36) for selectively connecting the first pin (15) to the monochrome pin (R ; R₄₂) or to the chrominance pin (C);
**characterised by**
- a micro-processor (30) generating a control signal (M) directed to the chrominance switch (36).

2. Video apparatus according to claim 1, wherein a CVBS generator (22) outputs a composite signal on a composite signal pin (CVBS), wherein the S-Video generator (24) outputs a luminance signal on a luminance pin (Y), wherein the Scart connector (28) comprises a second pin (19) and wherein a luminance switch (34) controlled by said control signal (M) selectively connects the second pin (19) to the composite signal pin (CVBS) or to the luminance pin (Y).

3. Video apparatus according to claim 1 or 2, wherein the chrominance switch (36) is controlled depending on said control signal (M) and on a fast-blanking signal (FB ; FB₄₈) for synchronisation of the monochrome signal.

4. Video apparatus according to claim 3, wherein the Scart connector (28) comprises a third pin (16) carrying said fast-blanking signal (FB ; FB₄₈).

5. Video apparatus according to claim 3 or 4, wherein the chrominance switch (36) is controlled by the output of an AND-gate (50) receiving said control signal (M) on a first input and on a second input said fast-blanking signal (FB ; FB₄₈) inverted by an inverter (52).

6. Video apparatus according to claim 1, wherein the chrominance switch (36) is controlled by said control signal (M).

7. Video apparatus according to claim 6, wherein the S-Video generator (24) outputs a luminance signal on a luminance pin (Y), wherein a video generator (54) comprising the S-Video generator (24) outputs a composite signal on a composite signal pin (CVBS), wherein the Scart connector (28) comprises a second pin (19) and wherein a luminance switch (34) controlled by said control signal (M) selectively connects the second pin (19) to the composite signal pin (CVBS) or to the luminance pin (Y).

8. Video apparatus according to claim 6, wherein a video generator (54) comprising the S-Video generator (24) outputs first RGB signals (R₅₄, G₅₄, B₅₄) to a RGB switch (42) and wherein the RGB switch (42) outputs second RGB signals (R₄₂, G₄₂, B₄₂) including said monochrome signal (R₄₂).

9. Video apparatus according to any of the preceding claims, wherein said RGB generator (26 ; 42) outputs at least a further monochrome signal on a further monochrome pin (G, B ; G₄₂, B₄₂) and wherein at least a ground switch (35, 37) selectively connects a further pin (11, 7) of the Scart connector (28) to said further monochrome pin (G, B ; G₄₂, B₄₂) or to ground.

10. Process for controlling a video apparatus according to claim 1, comprising the step of:
- allowing the user to select a preferred mode ;
- recording the preferred mode in a memory accessible to the micro-processor (30) ;
- generating said control signal (M) depending notably on said recorded preferred mode.
